(19) Europäisches Patentamt / European Patent Office / Office européen des brevets

(11) **EP 2 874 134 A1**

(12) **EUROPEAN PATENT APPLICATION**

(43) Date of publication:
20.05.2015 Bulletin 2015/21

(51) Int Cl.:
**G09B 19/00** (2006.01)　　　**A63B 69/36** (2006.01)

(21) Application number: **14193224.4**

(22) Date of filing: **14.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.11.2013 JP 2013237614**

(71) Applicant: **Seiko Epson Corporation
Tokyo 163 (JP)**

(72) Inventor: **Ishikawa, Yuya
Nagano, 392-8502 (JP)**

(74) Representative: **Hoffmann Eitle
Patent- und Rechtsanwälte PartmbB
Arabellastraße 30
81925 München (DE)**

(54) **Motion analysis method and motion analysis apparatus**

(57)　A motion analysis apparatus specifies a movement of at least one of a subject and a sporting gear operated by the subject as an indicator of supplementary information for motion analysis, using an output from an inertial sensor. The motion analysis apparatus can include an indicator detection unit which detects the indicator from the output from the inertial sensor, and an analysis data generation unit which generates analysis data in which supplementary information data corresponding to the indicator and motion analysis data from the inertial sensor correspond to each other.

**Description**

BACKGROUND

1. Technical Field

The present invention relates to a motion analysis method and a motion analysis apparatus or the like.

2. Related Art

Swing analysis in sports such as golf using an output from an inertial sensor is proposed (JP-A-2008-073210). An analysis of a golf swing requires information of the golf club that is being used. The information of the golf club, other than being inputted by operating an input device, is set by wireless transmission information from a wireless IC tag attached to the golf club (JP-A-2005-102902).

In the case where a wireless IC tag is used, reading devices for wireless communication need to be installed with a high density, making the whole system large-scale. In the case where the information of the golf club is inputted by operating an input device, a failure to input the golf club information causes an error in the result of measurement. Also, as an input operation on the input device is essential every time the golf club is replaced, continuous measurement is difficult.

SUMMARY

An advantage of some aspects of the invention is that a motion analysis apparatus and a motion analysis method in which supplementary information for motion analysis can be set without a large-scale system and without requiring a subject to carry out an input operation can be provided.

(1) An aspect of the invention relates to a motion analysis method including specifying a movement of at least one of a subject and a sporting gear operated by the subject as an indicator of supplementary information for motion analysis, using an output from an inertial sensor.

The inertial sensor outputs a detection signal during a series of movements of the subject or the sporting gear. In the motion analysis method of this configuration, the output from the inertial sensor is used as the motion analysis data of at least one of the subject and the sporting gear operated by the subject. However, the output is also used to specify a movement of at least one of the subject and the sporting gear that is different from the motion to be analyzed. The movement that is different from the motion to be analyzed is an indicator of supplementary information for motion analysis. The motion analysis can be carried out using the supplementary information. Therefore, the supplementary information for motion analysis can be set without requiring a large-scale system including reading devices or the like for wireless transmission from a wireless IC tag and without requiring the subject to carry out an input operation.

(2) The motion analysis method according to the aspect of the invention may include: detecting the indicator from the output from the inertial sensor; and generating analysis data in which supplementary information data corresponding to the indicator and motion analysis data based on output data from the inertial sensor correspond to each other.

In the detecting of the indicator, the movement of at least one of the subject and the sporting gear that is different from the motion to be analyzed is detected as an indicator of supplementary information for motion analysis. In the generation of analysis data, analysis data is generated in which supplementary information data corresponding to the detected indicator and motion analysis data from the inertial sensor correspond to each other. Using this analysis data, the supplementary information of the subject and/or the sporting gear can be reflected in the motion analysis.

(3) In the motion analysis method according to the aspect of the invention, the generating of analysis data may include reading out the supplementary information data stored corresponding to the indicator, based on the indicator.

By adding or rewriting the stored content, the indicator can be customized for each subject. According to the type of the sporting gear held by the subject, a movement that matches the subject's preference can be registered as an indicator.

(4) In the motion analysis method according to the aspect of the invention, the supplementary information may include at least one of type of the subject, type of the sporting gear, and type of ball hitting.

Thus, as types of the subject, for example, male/female distinction, professional/amateur distinction, right-handed/left-handed distinction or the like can be specified as supplementary information. Also, as types of the sporting gear, for example, the wood/iron types and the club number of the golf club can be specified as supplementary information. Moreover, as types of ball hitting, types such as straight, slice, hook, fade, draw, push, and pull in the case of golf swings, or types such as hitting to the center field, hitting to the field on the side of the player's dominant arm, and hitting to the field on the side opposite to the player's dominant arm in the case of baseball, can be specified as supplementary information.

(5)In the motion analysis method according to the aspect of the invention, in the detecting of the indicator, the indicator may be detected on the basis of a change in angular velocity generated about a longitudinal axis along which a shaft of the sporting gear extends.

In the case where the inertial sensor for motion analysis includes an angular velocity sensor in this manner, a movement of the sporting gear or the subject that generates a change in angular velocity about the axis of the shaft of the sporting gear can be used as an indicator of supplementary information.

(6) In the motion analysis method according to the aspect of the invention, in the detecting of the indicator, the indicator may be detected on the basis of a change in acceleration generated in the sporting gear.

In the case where the inertial sensor for motion analysis includes an acceleration sensor in this manner, a movement of the sporting gear or the subject that generates a change in acceleration in the sporting gear or the subject can be used as an indicator of supplementary information.

(7) In the motion analysis method according to the aspect of the invention, in the detecting of the indicator, a movement including at least one of or a combination of the number of times the sporting gear is turned, forward and reverse turns of the sporting gear in a forward direction or in a reverse direction, the number of impacts applied to the sporting gear, and a difference in impact level applied to the sporting gear, may be detected as the indicator.

Such a movement within a predetermined period that can be detected by the acceleration sensor or the angular velocity sensor is not inherent in the original motion of the sport. Therefore, such a movement can be regarded as an intentional movement of the subject and can be clearly discriminated from the original motion of the sport.

(8) In the motion analysis method according to the aspect of the invention, a movement of at least one of a subject and a sporting gear operated by the subject may be specified as an indicator of a start trigger signal to start selection of the supplementary information, using an output from the inertial sensor.

Thus, the subject can instruct a motion analysis apparatus to start detecting an indicator of supplementary information for motion analysis, through the subject's own movement.

(9) In the motion analysis method according to the aspect of the invention, in the detecting of the indicator, the indicator of the supplementary information may be detected during a predetermined period after the indicator of the start trigger signal is detected.

In the detecting of the indicator, the predetermined period after the indicator of the start trigger signal is detected can be set to an indicator acceptance mode.

(10) In the motion analysis method according to the aspect of the invention, in the detecting of the indicator, an error signal may be issued if the indicator of the supplementary information is not detected during the predetermined period.

Thus, if the indicator of the supplementary information is not detected during the predetermined period, the indicator acceptance mode can be ended. Also, the subject can be notified on the basis of the error signal and can be prompted to restart the detection of the indicator of the supplementary information for motion analysis.

(11) Another aspect of the invention relates to a motion analysis apparatus which specifies a movement of at least one of a subject and a sporting gear operated by the subject as an indicator of supplementary information for motion analysis, using an output from an inertial sensor.

According to this aspect of the invention, as with the foregoing aspect of the invention, the supplementary information for motion analysis can be set without requiring a large-scale system including reading devices or the like for wireless transmission from a wireless IC tag and without requiring the subject to carry out an input operation.

(12) Still another aspect of the invention relates to a motion analysis program which causes a computer to execute a procedure of specifying a movement of at least one of a subject and a sporting gear operated by the subject as an indicator of supplementary information for motion analysis, using an output from an inertial sensor.

This motion analysis program can cause a computer to execute the operation of the motion analysis apparatus according to the foregoing aspect of the invention. This program may be stored in the motion analysis apparatus from the beginning, may be stored in a storage medium and installed for motion analysis, or may be downloaded to a communication terminal of the motion analysis apparatus from a server via a network.

BRIEF DESCRIPTION OF THE DRAWINGS

The invention will be described with reference to the accompanying drawings, wherein like numbers reference like elements.

FIG. 1 is a conceptual view schematically showing the configuration of a golf swing analysis apparatus according to an embodiment of the invention.
FIG. 2 is a block diagram showing details of an inertial sensor and an arithmetic processing circuit shown in FIG. 1.
FIG. 3 is a flowchart of a subject identification mode.
FIG. 4 is a flowchart of a club selection mode.

FIGS. 5A to 5C are explanatory views showing an example of a movement of a golf club corresponding to a command/data used in the club selection mode.

FIG. 6 shows an example of a movement of a sporting gear that is different from a motion to be analyzed.

FIG. 7 shows an output from the inertial sensor that detects the motion shown in FIG. 6.

FIG. 8 shows another example of a movement of the sporting gear that is different from a motion to be analyzed.

FIG. 9 shows an output from the inertial sensor that detects the motion shown in FIG. 8.

FIG. 10 shows still another example of a movement of the sporting gear that is different from a motion to be analyzed.

FIG. 11 shows an output from the inertial sensor that detects the motion shown in FIG. 10.

FIG. 12 is a conceptual view schematically showing the relation between a motion analysis model, a golfer, and a golf club.

## DESCRIPTION OF EXEMPLARY EMBODIMENTS

Hereinafter, an embodiment of the invention will be described with reference to the accompanying drawings. The following embodiment is not to unduly limit the content of the invention described in the appended claims. Not all the configurations described in the embodiment are necessarily essential as measures for solution provided by the invention.

1. Configuration of Golf Swing Analysis Apparatus According to First Embodiment

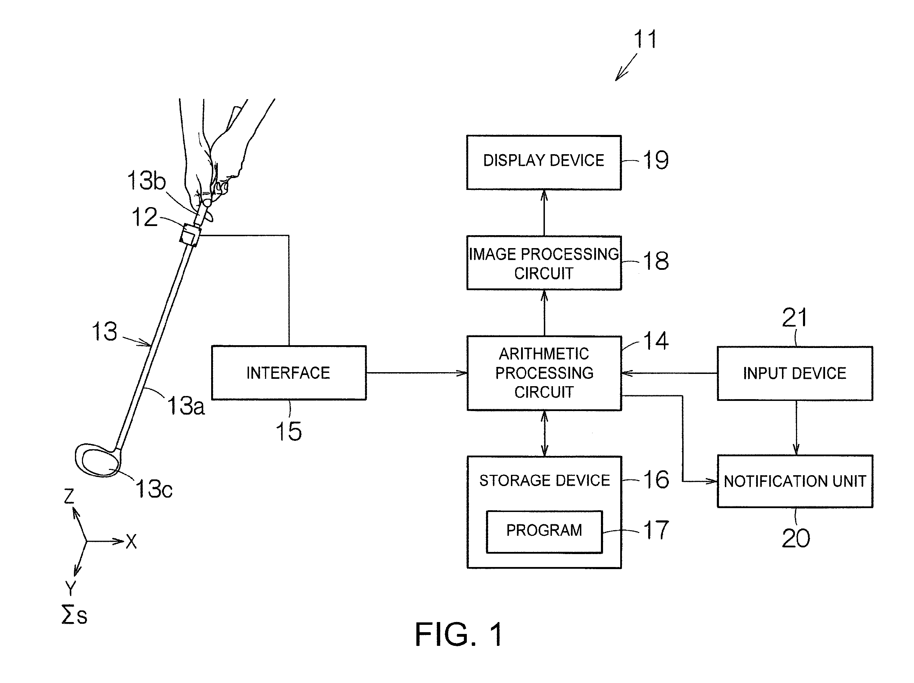

FIG. 1 schematically shows the configuration of a golf swing analysis apparatus (motion analysis apparatus) 11 according to a first embodiment of the invention. To the golf swing analysis apparatus 11, an output from an inertial sensor 12 attached to a golf club (sporting gear) 13 is inputted via an interface circuit 15. The golf club 13 includes a shaft 13a and a grip 13b. The grip 13b is gripped by a subject's hands. The grip 13b is formed on the same axis as a longitudinal axis along which the shaft 13a extends. A club head 13c is connected to the distal end of the shaft 13a. Preferably, the inertial sensor 12 is attached to the shaft 13a or the grip 13b of the golf club 13. The inertial sensor 12 may be fixed to be immovable relative to the golf club 13. The inertial sensor 12 may be thus mounted on the golf club 13. Alternatively, the inertial sensor 12 may be attached to the subject's hand, arm, or shoulder.

An acceleration sensor capable of three-axis detection and a gyro sensor capable of three-axis detection are incorporated in the inertial sensor 12. The inertial sensor outputs a detection signal. With the detection signal, acceleration and angular velocity are specified on each individual axis. The acceleration sensor and the gyro sensor detect information of acceleration and angular velocity relatively accurately. Here, when the inertial sensor 12 is installed, one of the detection axes of the inertial sensor is aligned with the direction of the longitudinal axis in which the shaft 13a extends. That is, the y-axis of the inertial sensor extends parallel to the longitudinal axis of the shaft 13a.

The golf swing analysis apparatus 11 has an arithmetic processing circuit 14. The inertial sensor 12 is connected to the arithmetic processing circuit 14 via the interface circuit 15. The interface circuit 15 may be wire-connected to the inertial sensor 12 or may be wirelessly connected to the inertial sensor 12. A detection signal is supplied to the arithmetic processing circuit 14 from the inertial sensor 12.

A storage device 16 is connected to the arithmetic processing circuit 14. For example, a golf swing analysis software program (motion analysis program) 17 and related data can be stored in the storage device 16. The arithmetic processing circuit 14 executes the golf swing analysis software program 17 and thus realizes a gold swing analysis method. A DRAM (dynamic random access memory), a large-capacity storage unit, a non-volatile memory and the like can be included in the storage device 16. For example, in the DRAM, the golf swing analysis software program 17 is temporarily held when the golf swing analysis method is carried out. In the large-capacity storage unit such as a hard disk drive (HDD), the golf swing analysis software program 17 and data are saved. In the non-volatile memory, a program and data of a relatively small volume such as BIOS (basic input/output system) are stored.

An image processing circuit 18 is connected to the arithmetic processing circuit 14. The arithmetic processing circuit 14 sends predetermined image data to the image processing circuit 18. A display device 19 is connected to the image processing circuit 18. The image processing circuit 18 sends an image signal to the display device 19 according to the inputted image data. An image specified by the image signal is displayed on the screen of the display device 19. A liquid crystal display or another flat-panel display is used for the display device 19.

A notification unit 20 and an input device 21 are connected to the arithmetic processing circuit 14. The notification unit 20 can notify the subject according to the result of the processing by the arithmetic processing circuit 14. In this embodiment, an output from the inertial sensor 12 attached to the golf club 13 is used as various commands and data inputs to the arithmetic processing circuit 14. This point will be described later. The input device 21 has at least alphabetical keys and ten-keys. Character information and numerical information are inputted to the arithmetic processing circuit 14 from the input device 21. The input device 21 may be made up of, for example, a keyboard. The combination of a computer unit and a keyboard may be replaced with, for example, a smartphone, mobile phone, tablet PC (personal computer) or the like.

2. Command and Data Input Procedure Using Output from Inertial Sensor

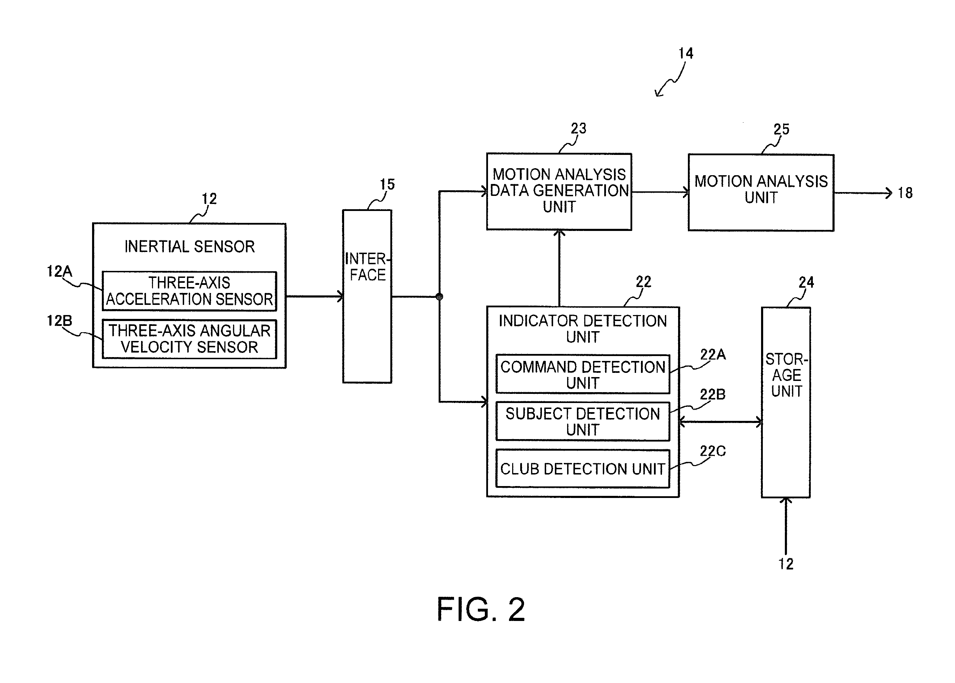

The arithmetic processing circuit 14 is shown in FIG. 2. As shown in FIG. 2, the arithmetic processing circuit 14 connected to the inertial sensor 12 via the interface circuit 15 has an indicator detection unit 22, a motion analysis data generation unit 23, a storage unit 24, and a motion analysis unit 25.

The indicator detection unit 22 detects a movement of at least one of the subject and the golf club 13 as an indicator of supplementary information for motion analysis, using an output from the inertial sensor 12 and stored information in the storage unit 24. Here, the inertial sensor 12 outputs a detection signal during a swing movement of the subject or the golf club 13. However, a different movement from the swing movement to be analyzed can be carried out before or after the swing movement. The indicator detection unit 22 detects an output from the inertial sensor 12 that represents the different movement from the swing motion to be analyzed, as an indicator. An output pattern of the inertial sensor 12 to be an indicator may be stored in the storage unit 24, and the indicator detection unit 22 may detect the indicator with reference to the stored information in the storage unit 24. The indicator detection unit 22 can read out supplementary information data stored to correspond to the indicator in the storage unit 24, on the basis of the indicator.

The motion analysis data generation unit 23 can be configured not to generate motion analysis data unless the supplementary information corresponding to the detected indicator is outputted from the indicator detection unit 22. The motion analysis data generation unit 23 can generate, for example, analysis data in which supplementary information data from the indicator detection unit 22 and motion analysis data from the inertial sensor 12 correspond to each other. The motion analysis unit 25 analyzes the motion on the basis of the analysis data.

In this embodiment, the indicator detection unit 22 can include a command detection unit 22A which detects a command indicator, a subject detection unit 22B which detects a subject identification indicator, and a club detection unit 22C which detects a golf club identification indicator.

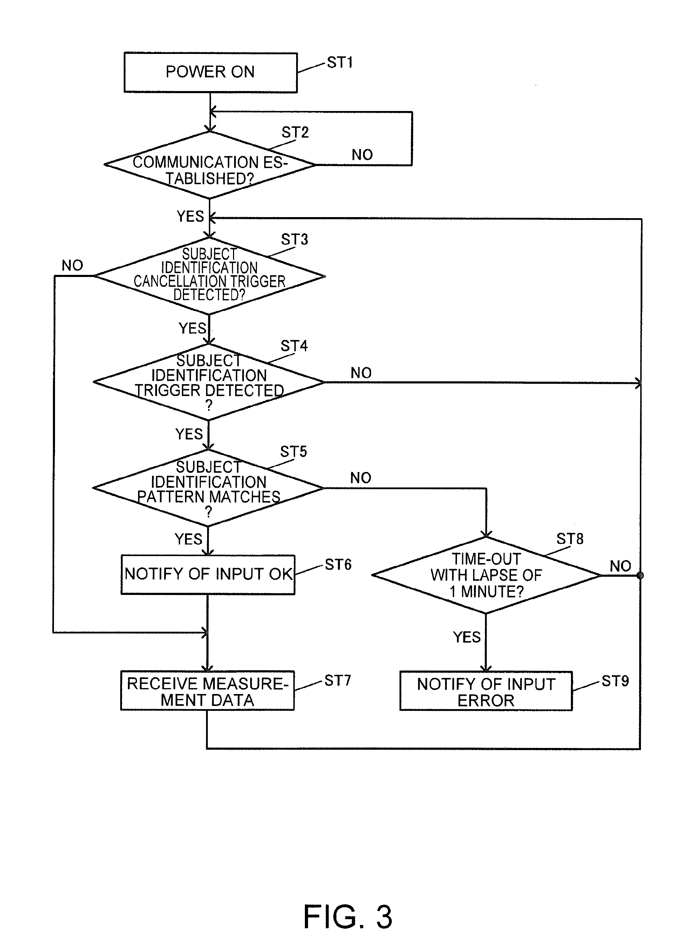

FIG. 3 is a flowchart of the detection of a subject identification indicator, using the command detection unit 22A and the subject detection unit 22B. First, power is turned on in the golf swing analysis apparatus 11 and the inertial sensor 12 (ST1), and it is determined whether communication between the golf swing analysis apparatus 11 and the inertial sensor 12 is established or not (ST2).

Next, it is determined whether a specific movement that signifies a subject identification selection cancellation command is detected by the command detection unit 22A on the basis of an output from the inertial sensor 12 or not (ST3). If the determination in Step ST3 is YES, it is then determined whether a specific movement that signifies a subject identification command is detected by the command detection unit 22A on the basis of an output from the inertial sensor 12 or not (ST4). If the determination in Step ST4 is YES, a subject identification mode begins. If the determination in Step ST3 is NO, the processing shifts to Step ST7.

In the subject identification selection mode, the output from the inertial sensor 12 is inputted to the subject detection unit 22B, where it is determined whether the output matches one of various subject identification patterns (male/female, professional/amateur, right-handed/ left-handed, age group, or the like) (ST5). If the output matches one of the subject identification patterns (YES in ST5), for example, a notification that club selection input is available is provided via the notification unit 20 (ST6).

If the determination in Step ST5 remains NO after the lapse of a predetermined period, for example, one minute, following the shift to the subject identification mode as a result of the determination YES in Step ST4, the subject identification mode is then determined as time-out (YES in ST8). In this case, the indicator detection unit 22 generates an error signal and the subject is notified of an input error via the notification unit 20 (ST9).

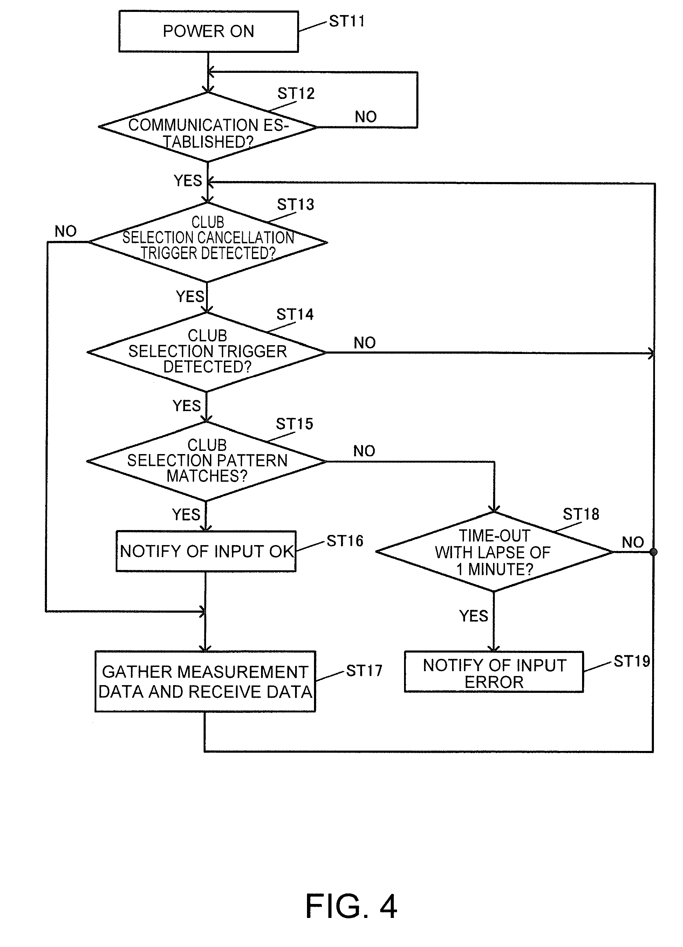

FIG. 4 is a flowchart of the detection of a club selection indicator, using the command detection unit 22A and the club detection unit 22C. First, power is turned on in the golf swing analysis apparatus 11 and the inertial sensor 12 (ST11), and it is determined whether communication between the golf swing analysis apparatus 11 and the inertial sensor 12 is established or not (ST12).

If the determination in Step ST12 is YES, it is then determined whether a specific movement that signifies a club selection cancellation command is detected by the command detection unit 22A on the basis of an output from the inertial sensor 12 or not (ST13). If the determination in Step ST13 is YES, it is then determined whether a specific movement that signifies a club selection command is detected by the command detection unit 22A on the basis of an output from the inertial sensor 12 or not (ST14). If the determination in Step ST14 is YES, a club selection mode begins. If the determination in Step ST13 is NO, the processing shifts to Step ST17.

In the club selection mode, the output from the inertial sensor 12 is inputted to the club detection unit 22C, where it is determined whether the output matches one of various club selection patterns (ST15) . If the output matches one of the club selection patterns (YES in ST15), a notification that swing analysis is available is provided via the notification unit 20 (ST16). If no club selection is made after the lapse of a predetermined period, for example, one minute, following the shift to the club selection mode, the mode is regarded as time-out and a notification of an input error is provided (ST18, ST19).

3. Movement of Golf Club (Subject) and Indicator

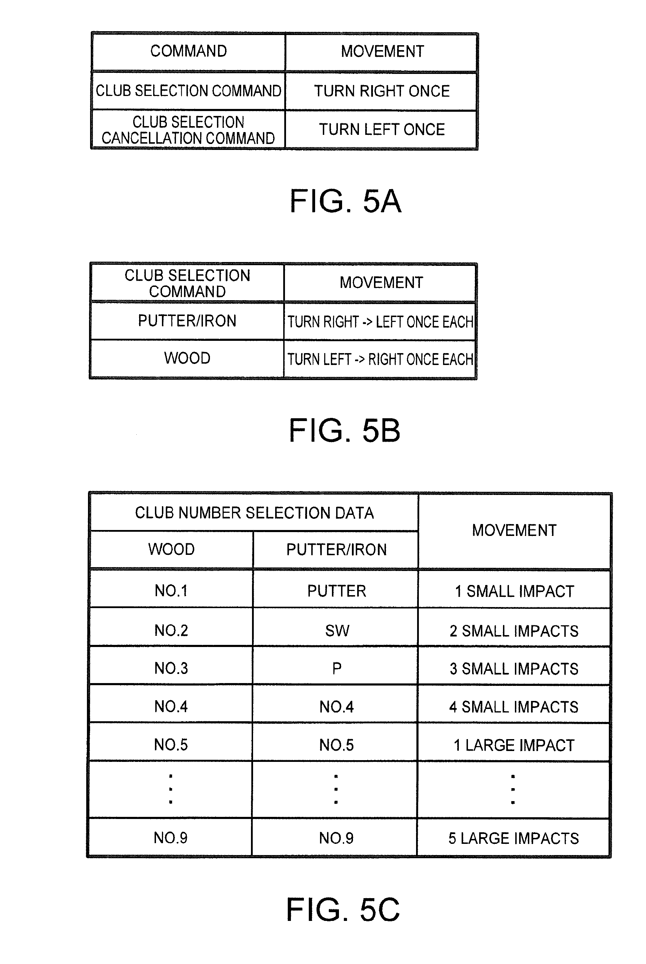

FIGS. 5A, 5B and 5C show the relations between a command/data for identifying a golf club determined according to the flowchart of FIG. 4 and the movement of the golf club (subject) corresponding to the command/data. The relations shown in FIGS. 5A, 5B and 5C can be set in advance in the storage unit shown in FIG. 2.

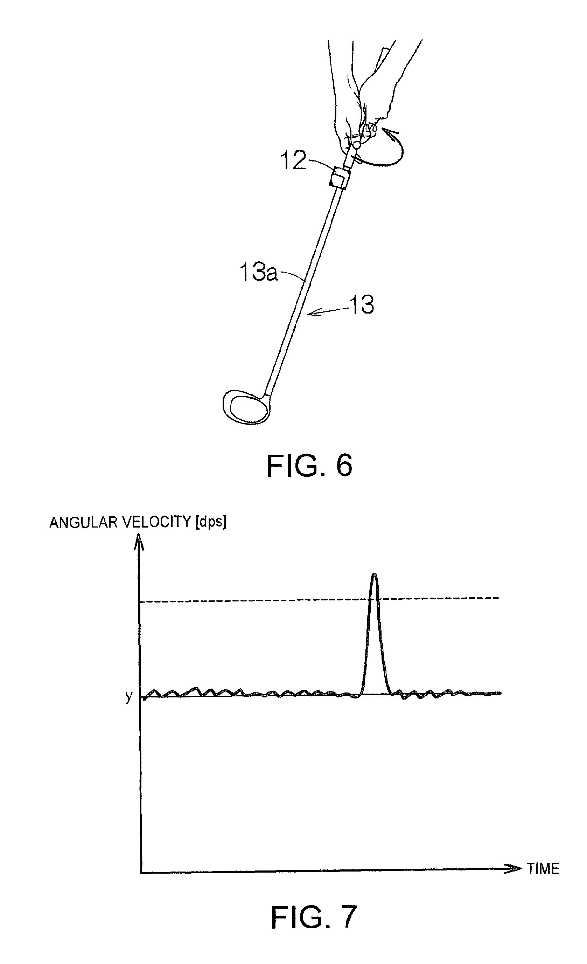

The club selection cancellation trigger (command) in Step ST13 of FIG. 4 is a movement of turning the shaft 13a of the golf club 13 to the left once about the axis of the shaft 13a, as shown in FIG. 5A. The club selection trigger (command) in Step ST14 of FIG. 4 is a movement of turning the shaft 13a of the golf club 13 to the right once about the axis of the shaft 13a, as shown in FIG. 5A. As the golf club 13 is turned in one direction about the center axis of the shaft 13a, as shown in FIG. 6, a large change, that is, a peak in the angular velocity about the y-axis appears in the output from the inertial sensor 12, as shown in FIG. 7. The waveform and magnitude of such a peak is stored in advance as an indicator in the storage unit 24. Thus, the command detection unit 22A of FIG. 2 can detect the club selection cancellation trigger and the club selection trigger.

The club selection pattern in Step ST15 of FIG. 4 is a combination of a movement shown in FIG. 5B and a movement shown in FIG. 5C. In Step ST15 of FIG. 4, first, a club selection command in FIG. 5B is detected by the command detection unit 22A.

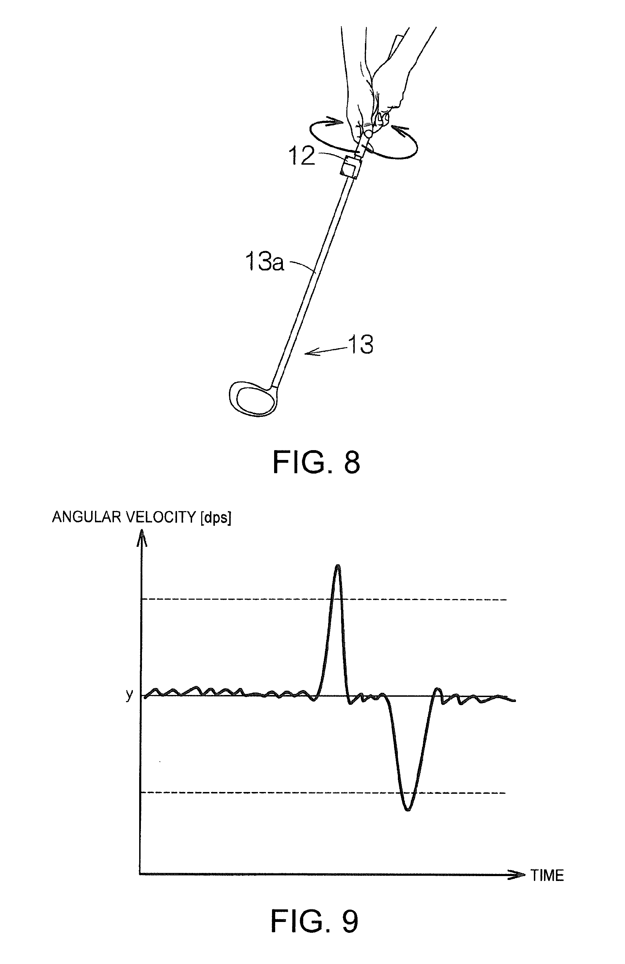

First, if the golf club 13 in use is either a putter or an iron, a movement of turning the shaft 13a of the golf club 13 to the right once about the axis of the shaft 13a and subsequently turning the shaft 13a to the left once (forward and reverse movement in the forward direction) is detected, as shown in FIG. 5B. If the golf club 13 in use is a wood, a movement of turning the shaft 13a of the golf club 13 to the left once about the axis of the shaft 13a and subsequently turning the shaft 13a to the right once (forward and reverse movement in the reverse direction) is detected, as shown in FIG. 5B. As the golf club 13 is turned in the forward and reverse directions about the center axis of the shaft 13a, as shown in FIG. 8, large forward and reverse changes, that is, two peaks in the angular velocity about the y-axis appear in the output from the inertial sensor 12, as shown in FIG. 9. The waveforms and magnitudes of such peaks are stored in advance as an indicator in the storage unit 24. Thus, the command detection unit 22A in Fig. 2 can detect a club selection command indicating either a putter/iron or a wood.

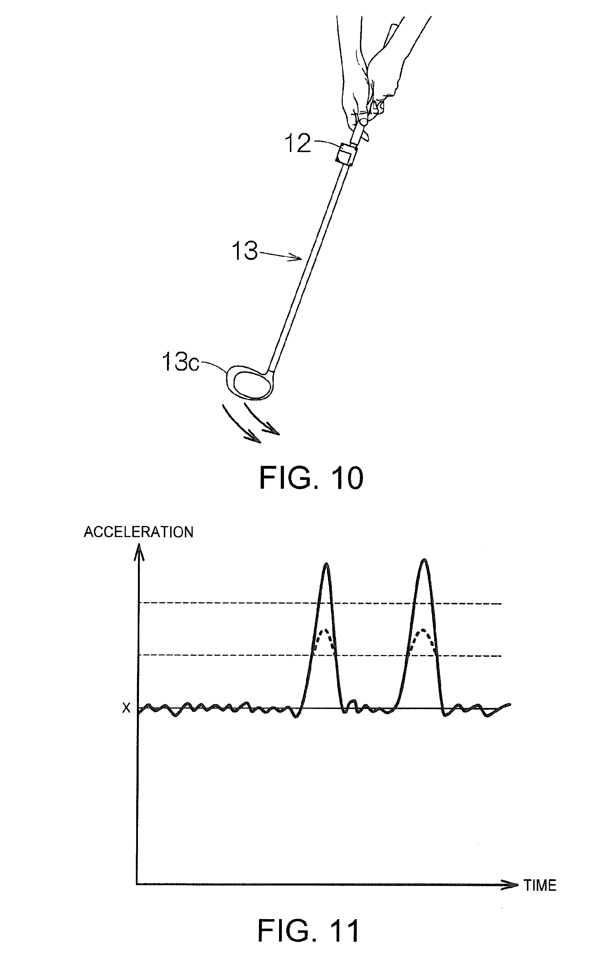

If the golf club 13 in use is a wood and the club number is No. 1, a small impact is applied to the club head 13c of the golf club 13 once. If the club number of the wood is No.1 to No.4, the club number is detected according to the numbers of small impacts (number of repetitions), as shown in FIG. 5C. If the club number of the wood is No.5 to No. 9, the club number is detected according to the numbers of large impacts of 1 to 5 (number of repetitions), as shown in FIG. 5C. If the golf club 13 in use is a putter/iron and is one of a putter, pitching wedge (P), sand wedge (SW), and No. 4 iron, the type and club number are detected according to the number of small impacts (number of repetitions), as shown in FIG. 5C. If the golf club 13 in use is a putter/iron and is one of No.5 to No.9 irons, the type and club number are detected according to the number of large impacts (number of repetitions), as shown in FIG. 5C. As a swing impact is applied to the club head 13c, for example, in the direction of a target line, that is, in the ball hitting direction, as shown in FIG. 10, a large change, that is, a peak in the acceleration in the x-axis direction appears in the output from the inertial sensor 12, as shown in FIG. 11. Large impacts and small impacts are discriminated, using two thresholds as shown in FIG. 11. Thus, the club detection unit 22C of FIG. 2 can detect the club number.

The movements of the golf club (subject) shown in FIGS. 5A, 5B and 5C are solely examples. The subject can arbitrarily register or change a movement via the input device 21 so as to customize indicators for each subject. As the subject identification trigger (command) and the subject identification cancellation trigger (command) used in Steps ST3 and ST4 of FIG. 3, different movements from the movements of FIG. 5A, for example, "turn right twice" and "turn left twice" or the like, may be employed. Thus, the command detection unit 22A can discriminate and determine the subject identification mode and the club selection mode. As the subject identification patterns employed in Step ST5 of FIG. 3, male/female, professional/amateur, right-handed/ left-handed, and age group (20s to 80s) distinctions can be set according to the large/small impact movements and the numbers of those impacts as shown in FIG. 5C.

As another example of useful supplementary information for analysis, the type of ball hitting as a type of swing intended by the subject can be employed. In the case of golf swings, types such as straight, slice, hook, fade, draw, push, and pull, and in the case of baseball, types such as hitting to the center field, hitting to the field on the side of the player's dominant arm, and hitting to the field on the side opposite to the player's dominant arm, can be specified as supplementary information. If the information of such types of ball hitting is inputted via a different movement from the motion to be analyzed, as in FIG. 6, 8 or 10 and is outputted as supplementary information of swing analysis information, the information of the types of ball hitting can be utilized as an indicator for an evaluation on whether an intended swing is achieved or not.

4. Motion Analysis Model

As a swing data gathering mode begins in Step ST17 of FIG. 4, an output from the inertial sensor 12 is inputted to the motion analysis data generation unit 23 (FIG. 2) in the arithmetic processing circuit 14 via the interface circuit 15. The motion analysis data generation unit 23 takes a correspondence between the supplementary information of the subject identification data, the golf club selection data and the target swing data corresponding to the indicator detected by the indicator detection unit 22 in advance, and the output from the inertial sensor 12, and outputs the supplementary information and the output corresponding to each other, to the motion analysis unit 25.

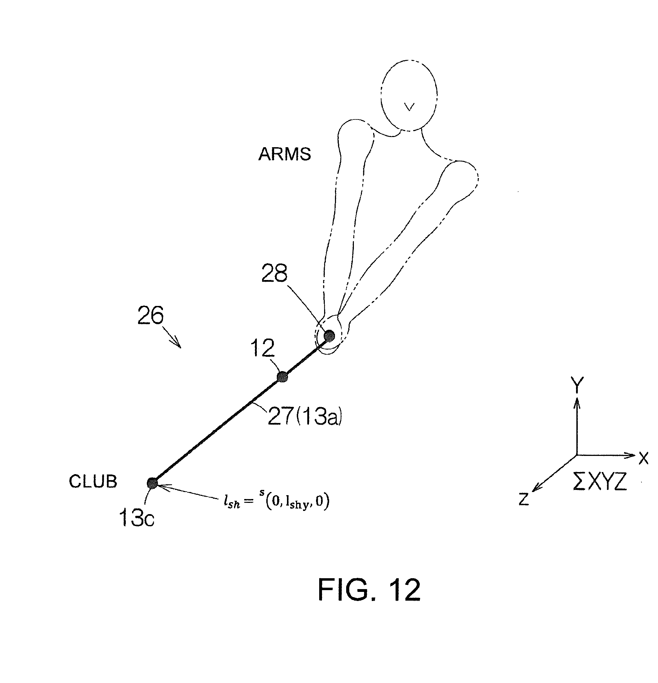

The motion analysis unit 25 prescribes an imaginary space. The imaginary space is formed as a three-dimensional space. The three-dimensional space specifies a real space. As shown in FIG. 12, the three-dimensional space has an absolute reference coordinate system (world coordinate system) $\Sigma XYZ$. In the three-dimensional space, a three-dimensional motion analysis model 26 is constructed according to the absolute reference coordinate system $\Sigma XYZ$. A bar 27 in the three-dimensional motion analysis model 26 is point-constrained at a support 28. The bar 27 moves three-dimensionally as a pendulum about the support 28. The position of the support 28 can move. Here, for example, the position of the club head 13c is specified according to the absolute reference coordinate system $\Sigma XYZ$. The position of the club head 13c from the inertial sensor 12 varies by each type of the golf club 13. Therefore, if the type of the golf club 13 is provided as supplementary information, the distance from the inertial sensor 12 to the club head 13c can be read out, for example, from the storage device 16 of FIG. 1 and can be specified by each type of the golf club 13. Alternatively, the dimensional information of the golf club 13 may be stored in the storage unit 24 (FIG. 2) and may be sent to the motion analysis data generation unit 23 as supplementary information by the indicator detection unit 22.

The three-dimensional motion analysis model 26 is equivalent to a modeled version of the golf club 13 at the time of a swing. The bar 27 of the pendulum projects the shaft 13a of the golf club 13. The support 28 of the bar 27 projects the grip 13b. The inertial sensor 12 is fixed to the bar 27. The position of the inertial sensor 12 is specified according to the absolute reference coordinate system $\Sigma XYZ$. The inertial sensor 12 outputs an acceleration signal and an angular velocity signal. As the acceleration signal, an acceleration signal including gravitational acceleration g is outputted.

The motion analysis unit 25 similarly fixes a local coordinate system (sensor coordinate system) $\Sigma s$ shown in FIG. 1 to the inertial sensor 12. The origin of the local coordinate system $\Sigma s$ is set to the origin of the detection axes of the inertial sensor 12. The y-axis of the local coordinate system $\Sigma s$ coincides with the axis of the shaft 13a, as shown in FIG. 1. The x-axis of the local coordinate system $\Sigma s$ coincides with the ball hitting direction specified by the direction of the face, as shown in FIG. 1. Therefore, according to this local coordinate system $\Sigma s$, the position lsh of the club head 13c is specified as (0, lshy, 0), as shown in FIG.12.

The motion analysis unit 25 finds the acceleration ash of the club head 13c, for example, based on acceleration $\alpha s$ and angular velocity $\omega s$ that are outputs from the inertial sensor 12 and length information, according to the following equation (1). Next, the motion analysis unit 25 integrates the acceleration ash from the velocity Vsh(0) =0 in the initial state (stationary state) and thus finds the velocity Vsh(t) according to the equation (2). Moreover, the motion analysis unit 25 integrates the velocity Vsh from the position Psh(0)=0 in the initial state (stationary state) and thus finds the position Psh(t) according to the equation (3).

$$\alpha_{sj} = \alpha_s + \dot{\omega}_s \times \ell_{sj} + \omega_s \times (\omega_s \times \ell_{sj}) + g \qquad (1)$$

$$V_{sh}(0) = 0$$
$$V_{sh}(t) = \sum_{n=1}^{t} \alpha_{sh}(n) \cdot dt \quad (t = 1, ..., N) \qquad (2)$$

$$P_{sh}(t) = \sum_{n=1}^{t} V_{sh}(n) \cdot dt \quad (t = 1, ..., N) \qquad (3)$$

After specifying the position lsh of the club head 13c according to the local coordinate system Σs proper to the inertial sensor 12 as described above, the motion analysis unit 25 transforms the position lsh to the coordinates in the local coordinate system Σs. That is, the position Psh(t) of the club head 13c is expressed by the coordinates (x, y, z) in the local coordinate system Σs shown in FIG. 1.

The data of the position Psh(t) of the club head 13c together with the supplementary information is sent to the image processing circuit 18 shown in FIG. 1 from the arithmetic processing circuit 14 including the motion analysis unit 25. The image processing circuit 18 generates image data in which the position Psh(t) of the club head 13c is plotted at each time points. As the display device 19 is driven on the basis of the image data, the swing trajectory of the club head 13c can be displayed. At this point, if the information of the subject, the information of the golf club or the target swing information is displayed as supplementary information, the swing trajectory of the club head 13c can be evaluated in consideration of the supplementary information.

In the embodiment, the individual function blocks of the arithmetic processing circuit 14 are realized according to the execution of the golf swing analysis software program 17. However, the individual function blocks may be realized by hardware, without depending on software processing. Also, the golf swing analysis apparatus 11 may be applied to swing analysis of other sporting gears that are held and swung by hand(s) (for example, a tennis racket, table tennis racket, or baseball bat).

The embodiment is described above in detail. However, a person skilled in the art can readily understand that various modifications can be made without substantially departing from the new matters and effects of the invention. Therefore, all such modifications are included in the scope of the invention. For example, a term described at least once together with a different term of a broader meaning or the same meaning can be replaced by the different term in any part of the specification and drawings. Also, the configurations and operations of the inertial sensor 12, golf club 13, the arithmetic processing circuit 14, the notification unit 20 and the like are not limited to those described in the embodiment and various modifications can be made thereto.

**Claims**

1. A motion analysis method comprising specifying a movement of at least one of a subject and a sporting gear operated by the subject as an indicator of supplementary information for motion analysis, using an output from an inertial sensor.

2. The motion analysis method according to claim 1, comprising:

   detecting the indicator from the output from the inertial sensor; and
   generating analysis data in which supplementary information data corresponding to the indicator and motion analysis data based on output data from the inertial sensor correspond to each other.

3. The motion analysis method according to claim 2, wherein the generating of analysis data includes reading out the supplementary information data stored corresponding to the indicator, based on the indicator.

4. The motion analysis method according to claim 2 or 3, wherein the supplementary information includes at least one of type of the subject, type of the sporting gear, and type of ball hitting.

5. The motion analysis method according to any one of claims 2 to 4, wherein, in the detecting of the indicator, the indicator is detected on the basis of a change in angular velocity generated about a longitudinal axis in a direction in which a shaft of the sporting gear extends.

6. The motion analysis method according to any one of claims 2 to 5, wherein, in the detecting of the indicator, the indicator is detected on the basis of a change in acceleration applied to the sporting gear.

7. The motion analysis method according to any one of claims 2 to 6, wherein, in the detecting of the indicator, a movement including at least one of or a combination of the number of times the sporting gear is turned, forward and reverse turns of the sporting gear in a forward direction or in a reverse direction, the number of impacts applied to the sporting gear, and a difference in impact level applied to the sporting gear, is detected as the indicator.

8. The motion analysis method according to any one of claims 2 to 7, wherein a movement of at least one of a subject and a sporting gear operated by the subject is specified as an indicator of a start trigger signal to start selection of the supplementary information, using an output from the inertial sensor.

9. The motion analysis method according to claim 8, wherein, in the detecting of the indicator, the indicator of the supplementary information is detected during a predetermined period after the indicator of the start trigger signal is detected.

10. The motion analysis method according to claim 9, wherein, in the detecting of the indicator, an error signal is issued if the indicator of the supplementary information is not detected during the predetermined period.

11. A motion analysis apparatus specifying a movement of at least one of a subject and a sporting gear operated by the subject as an indicator of supplementary information for motion analysis, using an output from an inertial sensor.

FIG. 1

EP 2 874 134 A1

EP 2 874 134 A1

FIG. 2

```
                    ┌─────────────────┐
                    │    POWER ON     │── ST1
                    └────────┬────────┘
                             │
                             ▼
                          ◆ ST2
                    ╱                ╲    NO
                 ╱  COMMUNICATION ES-  ╲─────────────┐
                 ╲     TABLISHED?      ╱              │
                    ╲                ╱                │
                       YES ◀─────────────────────────┼──────────┐
                        │                            │          │
                        ▼                            │          │
          NO         ◆ ST3                           │          │
        ┌──────────╱        SUBJECT       ╲          │          │
        │         ╱      IDENTIFICATION     ╲        │          │
        │         ╲  CANCELLATION TRIGGER   ╱        │          │
        │          ╲      DETECTED?        ╱         │          │
        │             ╲                 ╱            │          │
        │                 YES                        │          │
        │                  │                         │          │
        │                  ▼                         │          │
        │               ◆ ST4                        │          │
        │         ╱        SUBJECT       ╲   NO       │          │
        │        ╱     IDENTIFICATION     ╲──────────┘          │
        │        ╲   TRIGGER DETECTED     ╱                     │
        │         ╲        ?            ╱                        │
        │            ╲              ╱                            │
        │               YES                                     │
        │                │                                      │
        │                ▼                                      │
        │             ◆ ST5                                     │
        │        ╱        SUBJECT       ╲   NO                   │
        │       ╱     IDENTIFICATION     ╲──────────┐           │
        │       ╲   PATTERN MATCHES      ╱          │           │
        │        ╲        ?            ╱            │           │
        │           ╲             ╱                 │           │
        │              YES                          ▼           │
        │               │                        ◆ ST8         │
        │               ▼                   ╱            ╲  NO   │
        │   ┌─────────────────────┐        ╱  TIME-OUT    ╲─────●
        │   │ NOTIFY OF INPUT OK  │── ST6  ╲ WITH LAPSE OF ╱    │
        │   └──────────┬──────────┘        ╲   1 MINUTE?  ╱     │
        │              │                      ╲        ╱        │
        └──────────────┤                        YES             │
                       │                         │              │
                       ▼                         ▼              │
          ┌─────────────────────┐    ┌─────────────────────┐   │
          │ RECEIVE MEASURE-    │    │  NOTIFY OF INPUT    │── ST9
          │ MENT DATA           │── ST7 │     ERROR        │   │
          └──────────┬──────────┘    └──────────┬──────────┘   │
                     │                          │              │
                     └──────────────────────────┴──────────────┘
```

# FIG. 3

12

POWER ON —ST11

ST12

COMMUNICATION ES-TABLISHED? → NO

YES

CLUB SELECTION CANCELLATION TRIGGER DETECTED? ST13

NO

YES

CLUB SELECTION TRIGGER DETECTED? ST14 → NO

YES

CLUB SELECTION PATTERN MATCHES? ST15 → NO

YES

NOTIFY OF INPUT OK —ST16

TIME-OUT WITH LAPSE OF 1 MINUTE? ST18 → NO

YES

GATHER MEASUREMENT DATA AND RECEIVE DATA —ST17

NOTIFY OF INPUT ERROR —ST19

# FIG. 4

| COMMAND | MOVEMENT |
|---|---|
| CLUB SELECTION COMMAND | TURN RIGHT ONCE |
| CLUB SELECTION CANCELLATION COMMAND | TURN LEFT ONCE |

## FIG. 5A

| CLUB SELECTION COMMAND | MOVEMENT |
|---|---|
| PUTTER/IRON | TURN RIGHT -> LEFT ONCE EACH |
| WOOD | TURN LEFT -> RIGHT ONCE EACH |

## FIG. 5B

| CLUB NUMBER SELECTION DATA | | MOVEMENT |
|---|---|---|
| WOOD | PUTTER/IRON | |
| NO.1 | PUTTER | 1 SMALL IMPACT |
| NO.2 | SW | 2 SMALL IMPACTS |
| NO.3 | P | 3 SMALL IMPACTS |
| NO.4 | NO.4 | 4 SMALL IMPACTS |
| NO.5 | NO.5 | 1 LARGE IMPACT |
| ⋮ | ⋮ | ⋮ |
| NO.9 | NO.9 | 5 LARGE IMPACTS |

## FIG. 5C

## FIG. 6

## FIG. 7

## FIG. 8

ANGULAR VELOCITY [dps]

TIME

## FIG. 9

FIG. 10

FIG. 11

ARMS

26

28

12

27(13a)

CLUB

$l_{sh} = {}^{s}(0, l_{shy}, 0)$

13c

Y

Z

X

$\Sigma XYZ$

## FIG. 12

Europäisches
Patentamt

European
Patent Office

Office européen
des brevets

# EUROPEAN SEARCH REPORT

Application Number

EP 14 19 3224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/166737 A1 (BENTLEY MICHAEL D [US]) 27 July 2006 (2006-07-27) | 1-6,11 | INV. G09B19/00 A63B69/36 |
| A | * paragraphs [0024], [0028], [0041], [0042] * | 7-10 | |
| A | US 2013/102419 A1 (JEFFERY MARK JOHN [US] ET AL) 25 April 2013 (2013-04-25) * paragraphs [0007], [0041], [0051] * | 1-11 | |
| A | JP 2008 073210 A (SEIKO EPSON CORP) 3 April 2008 (2008-04-03) * abstract * | 1 | |
| A | US 2013/191063 A1 (NOMURA KAZUO [JP]) 25 July 2013 (2013-07-25) * claim 1; figure 1 * | 1-11 | |

TECHNICAL FIELDS
SEARCHED      (IPC)

G09B
A63B

The present search report has been drawn up for all claims

| Place of search | Date of completion of the search | Examiner |
|---|---|---|
| Munich | 11 March 2015 | Beauce, Gaetan |

EPO FORM 1503 03.82 (P04C01)

**ANNEX TO THE EUROPEAN SEARCH REPORT
ON EUROPEAN PATENT APPLICATION NO.**

EP 14 19 3224

This annex lists the patent family members relating to the patent documents cited in  the above-mentioned European search report.
The members are as contained in the European Patent Office EDP file on
The European Patent Office is in no way liable for these particulars which are merely given for the purpose of information.

11-03-2015

| Patent document cited in search report | | Publication date | Patent family member(s) | | Publication date |
|---|---|---|---|---|---|
| US 2006166737 | A1 | 27-07-2006 | EP | 1846115 A2 | 24-10-2007 |
| | | | JP | 2008528195 A | 31-07-2008 |
| | | | KR | 20070095407 A | 28-09-2007 |
| | | | US | 2006166737 A1 | 27-07-2006 |
| | | | US | 2007270214 A1 | 22-11-2007 |
| | | | US | 2014114453 A1 | 24-04-2014 |
| | | | WO | 2006081395 A2 | 03-08-2006 |
| US 2013102419 | A1 | 25-04-2013 | AU | 2012329114 A1 | 17-04-2014 |
| | | | CA | 2850641 A1 | 02-05-2013 |
| | | | CN | 104023799 A | 03-09-2014 |
| | | | EP | 2771081 A1 | 03-09-2014 |
| | | | JP | 2015504259 A | 05-02-2015 |
| | | | KR | 20140096302 A | 05-08-2014 |
| | | | US | 2013102419 A1 | 25-04-2013 |
| | | | WO | 2013062873 A1 | 02-05-2013 |
| JP 2008073210 | A | 03-04-2008 | NONE | | |
| US 2013191063 | A1 | 25-07-2013 | CN | 103212192 A | 24-07-2013 |
| | | | JP | 2013152503 A | 08-08-2013 |
| | | | US | 2013191063 A1 | 25-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008073210 A
- JP 2005102902 A